# EUROPEAN PATENT SPECIFICATION

(11) **EP 3 996 042 B1**
(45) Date of publication and mention of the grant of the patent: **02.12.2026**
(21) Application number: 20912594.7
(22) Date of filing: 14.10.2020
(51) Int. Cl.: G06T 7/55, G06T 7/33, G06T 17/20

(54) **THREE-DIMENSIONAL MODEL TEXTURE OBTAINING METHOD AND RELATED DEVICE**
VERFAHREN ZUR GEWINNUNG EINER DREIDIMENSIONALEN MODELLTEXTUR UND ENTSPRECHENDE VORRICHTUNG
PROCÉDÉ D'OBTENTION DE TEXTURE DE MODÈLE TRIDIMENSIONNEL ET DISPOSITIF ASSOCIÉ

(30) Priority: 10.01.2020 CN 202010027225
(43) Date of publication of application: 11.05.2022
(73) Proprietor: Tencent Technology (Shenzhen) Company Limited, Shenzhen, Guangdong 518057 (CN)
(72) Inventor: LIN, Xiangkai, Shenzhen, Guangdong 518057 (CN)
(74) Representative: Nederlandsch Octrooibureau
(86) International application number: PCT/CN2020/120797
(87) International publication number: WO 2021/139293

(56) References cited:
- CN-A- 109 242 961
- CN-A- 110 070 598
- CN-A- 110 895 823
- US-A1- 2018 025 540
- ZHOU QIAN-YI ET AL: "Color map optimization for 3D reconstruction with consumer depth cameras", ACM TRANSACTIONS ON GRAPHICS, ACM, NY, US, vol. 33, no. 4, 27 July 2014 (2014-07-27), pages 1 - 10, XP058516154, ISSN: 0730-0301, DOI: 10.1145/2601097.2601134
- RICHARD A NEWCOMBE ET AL: "KinectFusion: Real-time dense surface mapping and tracking", MIXED AND AUGMENTED REALITY (ISMAR), 2011 10TH IEEE INTERNATIONAL SYMPOSIUM ON, IEEE, 26 October 2011 (2011-10-26), pages 127 - 136, XP032201443, ISBN: 978-1-4577-2183-0, DOI: 10.1109/ISMAR.2011.6092378
- ANONYMOUS: "k-nearest neighbors algorithm - Wikipedia", 14 December 2017 (2017-12-14), XP055587613, Retrieved from the Internet <URL:https://en.wikipedia.org/w/index.php?title=K-nearest_neighbors_algorithm&oldid=815389932> [retrieved on 20190510]

## Description

### RELATED APPLICATION

This application claims priority to Chinese Patent Application No. 202010027225.1, entitled "METHOD AND APPARATUS FOR ACQUIRING TEXTURE OF 3D MODEL, DEVICE, AND MEDIUM" filed with the China National Intellectual Property Administration on January 10, 2020.

### FIELD OF THE TECHNOLOGY

The invention relates to the field of electronic technologies, and more particularly, to a method and apparatus for acquiring a texture of a three-dimensional (3D) model, a computing device, a storage medium and a computer program product.

### BACKGROUND

The face reconstruction technology is a technology that reconstructs a 3D face model from one or more two-dimensional (2D) face images.

In particular work, a user may take a plurality of 2D pictures from different angles according to the instructions of a terminal. The 2D face images acquired through photographing include the color information and depth information of the pictures. In the process of 3D reconstruction, 3D points are back-projected from the depth information. The projected 3D points have a correspondence with pixels in the color information. After the 3D points projected from different 2D images are fused, a reconstructed 3D face model can be acquired. Finally, according to the correspondence, the pixels corresponding to the 3D points in the 3D face model are pasted on the 3D model, so that the texture mapping of the 3D model can be implemented, and the 3D model is colorful.

ZHOU QIAN-YI ET AL: "Color map optimization for 3D reconstruction with consumer depth cameras", ACM TRANSACTIONS ON GRAPHICS, ACM, NY, US, vol. 33, no. 4, 27 July 2014, presents a global optimization approach for mapping color images onto geometric reconstructions.

RICHARD A NEWCOMBE ET AL: "KinectFusion: Real-time dense surface mapping and tracking", MIXED AND AUGMENTED REALITY (ISMAR), 2011 10TH IEEE INTERNATIONAL SYMPOSIUM ON, IEEE, 26 October 2011, presents a system for accurate real time mapping of complex and arbitrary indoor scenes in variable lighting conditions, using only a moving low-cost depth camera and commodity graphics hardware.

### SUMMARY

In view of this, to resolve the foregoing problems, the technical solutions provided in the invention are as follows.

In an aspect, embodiments of the invention provide a method for acquiring a texture of a 3D model, performed by a computing device, the method including: acquiring at least two 3D networks generated from a target object at a plurality of angles, the at least two 3D networks each including point cloud information of the target object, a first correspondence between the point cloud information and color information of the target object, and a first camera pose of the target object, the first camera pose representing a displacement of the target object relative to a reference position when the respective 3D network is generated; moving the at least two 3D networks to a same orientation according to the first camera poses respectively included in the at least two 3D networks; acquiring a second point closest to a first point in a first network, the second point being in a second network, and the first network and the second network being different 3D networks from the at least two 3D networks; acquiring an offset between the first point and the second point; updating the first correspondence according to the offset, to acquire a second correspondence between the point cloud information and the color information of the target object; and acquiring a surface color texture of a 3D model of the target object according to the second correspondence.

In another aspect, the embodiments of the invention provide an apparatus for acquiring a texture of a 3D model, including a first acquisition unit, a second acquisition unit, an update unit and a third acquisition unit.

The first acquisition unit is configured to acquire at least two 3D networks generated from a target object at a plurality of angles, the at least two 3D networks each including point cloud information of the target object, a first correspondence between the point cloud information and color information of the target object, and a first camera pose of the target object, the first camera pose representing a displacement of the target object relative to a reference position when the respective 3D network is generated.

The second acquisition unit is configured to: move the at least two 3D networks to a same orientation according to the first camera poses respectively included in the at least two 3D networks; acquire a second point closest to a first point in a first network, the second point being in a second network, and the first network and the second network being different 3D networks from the at least two 3D networks; and acquire an offset between the first point and the second point.

The update unit is configured to update the first correspondence according to the offset acquired by the second acquisition unit, to acquire a second correspondence between the point cloud information and the color information of the target object.

The third acquisition unit is configured to acquire a surface color texture of a 3D model of the target object according to the second correspondence acquired by the update unit.

Optionally, the second acquisition unit is further configured to: traverse all points in the second network; respectively acquire 3D coordinates of all the points in the second network; respectively calculate distances between the points in the second network and the first point according to the 3D coordinates; and determine a point in the second network closest to the first point as the second point.

Optionally, the second acquisition unit is further configured to acquire the second point closest to the first point by using a k-Nearest Neighbor (kNN) algorithm.

Optionally, the update unit is further configured to: acquire a pixel in the color information corresponding to a 3D point in the point cloud information according to the first correspondence; offset the 3D point in the point cloud information according to the offset; and acquire a correspondence between the 3D point acquired after being offset in the point cloud information and the pixel as the second correspondence.

Optionally, the offset includes a rotation matrix R representing a rotation operation and a translation matrix T representing a translation operation, and the update unit is further configured to execute the following formula: D1=(R|T)×D2, where D1 is point cloud information in a 3D network, and D2 is information in another 3D network.

Optionally, the third acquisition unit is further configured to acquire the pixels respectively corresponding to the 3D points of the 3D model according to the second correspondence; and cover the pixels on the corresponding 3D points to implement texture mapping on a surface of the 3D model.

Optionally, the first acquisition unit is further configured to: acquire at least two initial images of the target object at different shooting angles, the at least two initial images respectively recording depth information of the target object, the depth information being used for recording a distance between each point of the target object and the reference position, and the reference position being a position of a camera that photographs the target object; perform back-projection in a 3D space according to the depth information in each initial image, to acquire first point cloud information corresponding to each initial image, a point in the first point cloud information being used for recording a 3D point of the target object; acquire the first correspondence between the 3D point and the pixel in the color information; and generate the 3D network according to the first point cloud information and the first correspondence.

In another aspect, the embodiments of the invention further provide a computing device, including an input/output (I/O) interface, a processor, and a memory, the memory storing a program instruction. The interaction apparatus is configured to acquire operation instructions inputted by a user. The processor is configured to execute the program instructions stored in the memory to perform any of the foregoing methods.

In still another aspect, the embodiments of the invention provide a storage medium, configured to store a computer program, the computer program being configured to perform the method in the foregoing aspects.

In still another aspect, the embodiments of the invention provide a computer program product including instructions which, when being run on a computer, cause the computer to perform the method in the foregoing aspects.

A method for acquiring a texture of a 3D model provided in the embodiments of the invention includes: acquiring at least two 3D networks generated from a target object at a plurality of angles, the at least two 3D networks each including a first correspondence between point cloud information and color information of the target object, and a first camera pose of the target object, the first camera pose representing a displacement of the target object relative to a reference position when the 3D network is generated; acquiring an offset between 3D points used for recording the same position of the target object in the at least two 3D networks according to the first camera poses; updating the first correspondence according to the offset, to acquire a second correspondence between the point cloud information and the color information of the target object; and acquiring a surface color texture of a 3D model of the target object according to the second correspondence. By updating the correspondence between the point cloud information and the color information, a more precise and subtle alignment between the 3D points and the pixels in the 3D model is realized, and an effect of texture mapping of the 3D model is improved.

### BRIEF DESCRIPTION OF THE DRAWINGS

To facilitate a better understanding of the technical solutions in the embodiments of the invention or in the related art, the following briefly describes the accompanying drawings required for describing the embodiments or the related art. It is apparent that the accompanying drawings in the following descriptions show merely the embodiments of the invention, and a person of ordinary skill in the art may still derive other drawings from these accompanying drawings without having to exert creative efforts.
FIG. 1 is a flowchart of an embodiment of a method for acquiring a texture of a 3D model according to an embodiment of the invention.
FIG. 2 is a flowchart of another embodiment of a method for acquiring a texture of a 3D model according to an embodiment of the invention.
FIG. 3 is a schematic diagram of another embodiment of a method for acquiring a texture of a 3D model according to an embodiment of the invention.
FIG. 4 is a schematic diagram of another embodiment of a method for acquiring a texture of a 3D model according to an embodiment of the invention.
FIG. 5 is a flowchart of another embodiment of a method for acquiring a texture of a 3D model according to an embodiment of the invention.
FIG. 6 is a flowchart of another embodiment of a method for acquiring a texture of a 3D model according to an embodiment of the invention.
FIG. 7 is a schematic diagram of a color image and a depth image of a method for acquiring a texture of a 3D model according to an embodiment of the invention.
FIG. 8 is a schematic diagram of first point cloud information of a method for acquiring a texture of a 3D model according to an embodiment of the invention.
FIG. 9 is an alignment effect diagram of a pixel network covering a user face in the related art.
FIG. 10 is an alignment effect diagram of a pixel network covering a user face of a method for acquiring a texture of a 3D model according to an embodiment of the invention.
FIG. 11 is a schematic diagram of a computing device according to an embodiment of the invention.
FIG. 12 is a schematic diagram of an apparatus for acquiring a texture of a 3D model according to an embodiment of the invention.

### DETAILED DESCRIPTION

The technical solutions in the embodiments of the invention are clearly and completely described in the following with reference to the accompanying drawings in the embodiments of the invention. It is apparent that the described embodiments are merely some rather than all of the embodiments of the invention. All other embodiments obtained by a person of ordinary skill in the art based on the embodiments of the invention without creative efforts shall fall within the protection scope of the invention.

In the specification, claims, and accompanying drawings of the invention, the terms "first", "second", "third", "fourth", and so on (if existing) are intended to distinguish between similar objects rather than describe a specific order or sequence. It is to be understood that the data used in such a way is interchangeable in proper cases, so that the embodiments described herein can be implemented in other orders than the order illustrated or described herein. Moreover, the terms "include" and "contain" and any other variants thereof mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

The face reconstruction technology is a technology that reconstructs a 3D face model from one or more 2D face images.

In specific work, the user takes a plurality of 2D pictures from different angles according to the instructions of a terminal. The 2D face images acquired through photographing include the color information and depth information of the pictures. In the process of 3D reconstruction, 3D points are back-projected from the depth information. The projected 3D points have a correspondence with pixels in the color information. After the 3D points projected from different 2D images are fused, a reconstructed 3D face model can be acquired. Finally, according to the correspondence, the pixels corresponding to the 3D points in the 3D face model are pasted on the 3D model, so that the texture mapping of the 3D model can be implemented, and the 3D model is colorful.

In the texture mapping process, after the step of fusing the 3D points, the correspondence between the 3D point and pixel may not be accurate enough. In addition, even if the correspondence is accurate enough, because the face is not a rigid body, images taken at various moments may not be ensured to be completely still (blinking and mouth twitching may occur), and these errors are smoothed out during the 3D reconstruction, resulting in the 3D model being unable to align with the pixels according to the correspondence. If there is a deviation in the correspondence, for example, a point on a nose tip in the 3D model corresponds to a pixel on a mouth in the color information, during the texture mapping process, a color in the mouth is mapped to the nose tip of the 3D model, resulting in a wrong texture in the 3D model.

Therefore, to resolve the problems, the embodiments of the invention provide a method for acquiring a texture of a 3D model, which updates a correspondence between point cloud information and color information, to implement finer alignment between texture information and the 3D model. For ease of understanding, the following describes the method provided in the embodiments of the invention in detail with reference to the accompanying drawings.

The method provided in the embodiments of the invention may be applied to various different target objects such as a face, a toy, or a vehicle, which is not limited in the embodiments of the invention. For ease of understanding, an example in which the target object is a face is used in the embodiments of the invention for description.

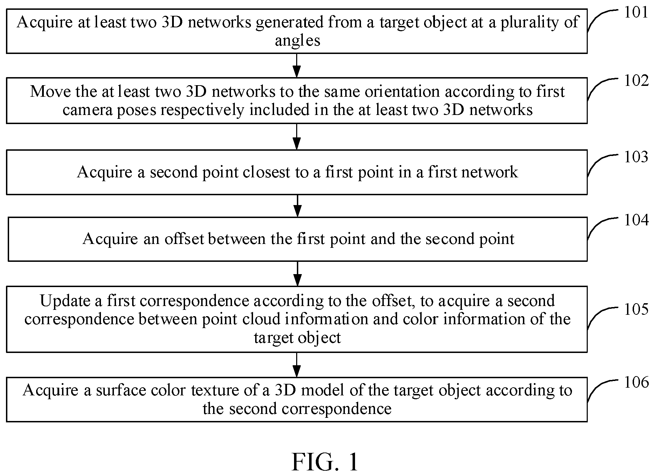

Referring to FIG. 1, as shown in FIG. 1, a method for acquiring a texture of a 3D model provided in a first embodiment of the invention includes the following steps.

At 101, at least two 3D networks generated from a target object at a plurality of angles are acquired.

In this embodiment, a specific method for generating the 3D network is as follows.

At 1, at least two initial images of the target object at a plurality of shooting angles are acquired.

In this embodiment, the initial images are images of the target object taken from different angles, for example, face images taken in different angles by a user under the guidance of a terminal. The camera includes a depth lens, so that at least two initial images respectively record depth information of the face, and the depth information is used for recording a distance between each point of the target object and the camera.

Optionally, the initial image may alternatively be acquired in another manner such as scanning, which is not limited in the embodiments of the invention.

At 2, back-projection is performed in a 3D space according to the depth information in each initial image, to acquire first point cloud information corresponding to each initial image.

In this embodiment, points in the first point cloud information are used for recording 3D points of the target object, for example, when the target object is a face, a plurality of 3D points on a surface of the face are recorded in the first point cloud information.

At 3, a first correspondence between the 3D point and a pixel in color information is acquired.

In this embodiment, when the initial image is generated, the point recording the depth information is in a one-to-one correspondence with the pixel. After the depth information is projected as the 3D point, the point recording the depth information is projected as the 3D point in the 3D space. Therefore, the 3D point still maintains a correspondence, that is, the first correspondence with the pixel.

At 4, the 3D network is generated according to the first point cloud information and the first correspondence.

In this embodiment, the generated 3D network includes the first point cloud information, and the first correspondence between the 3D point in the first point cloud information and the pixel.

Therefore, in step 101, the at least two acquired 3D networks respectively include the first correspondence between the point cloud information and the color information of the target object (that is, the correspondence between the 3D point and the pixel), and the first camera pose of the target object, the first camera pose representing a movement of the target object relative to a camera when the respective 3D network is generated.

At 102, the at least two 3D networks are moved to the same orientation according to the first camera poses respectively included in the at least two 3D networks.

In this embodiment, each 3D network is a 3D point cloud set generated based on one initial image, and therefore can support 360-degree rotation. An orientation of each 3D network can be known according to the pose of the camera recorded in the 3D network. Therefore, the plurality of 3D networks are moved to the same orientation according to the first camera poses, to perform subsequent steps. Specifically, a 3D network may be first set as a first frame. For example, a 3D network generated by a front face image of the user is used as a first frame, other 3D networks are then uniformly moved to an orientation at which the first frame is located. A specific operation manner of the movement may be at least one of rotation or translation.

At 103, a second point closest to a first point in a first network is acquired.

In this embodiment, the first point and the second point are 3D points in two different 3D networks. For example, the first point is a point in the first network, the second point is a point in a second network, and the first network and the second network are two different 3D networks from the at least two 3D networks. Because all 3D networks are at the same orientation, a point closest to a point belonging to another 3D network is likely to be a 3D point used for recording the same position of the target object.

At 104, an offset between the first point and the second point is acquired.

In this embodiment, when the second point is the point closest to the first point, and the second point and the first point do not overlap, the offset between the two points is acquired. The offset may be at least one of relative rotation or translation between the first point and the second point, and the offset is acquired by acquiring the offset between the first point and the second point.

In this embodiment, because the shooting angles of the initial image are different when the 3D network is generated, there may be a certain deviation for the 3D points that record the same position of the target object. For example, a point A of the nose tip of the user is recorded in a 3D network generated by a front face picture, and a point B of the nose tip of the user is recorded in a 3D network generated by a side face picture. When rotated to the same orientation, the point A and the point B may not completely overlap due to a deviation. In this case, the deviation between the point A and the point B is an offset between the two points.

At 105, the first correspondence is updated according to the offset, to acquire a second correspondence between the point cloud information and the color information of the target object.

In this embodiment, because the offset exists between the two points recording the same position, a position of the point changes during the subsequent point cloud fusion process. For example, as described in the above example, in the 3D networks generated by the front face picture and the side face picture, there is an offset between the point A and the point B that are respectively used for recording the nose tip of the user, and after the point cloud fusion, the point A in the 3D network generated by the front face picture changes due to the offset. In this case, the point A may no longer be at the position of the nose tip of the user. According to the original first correspondence, the point A still corresponds to a pixel of the nose tip of the user. Therefore, the pixel corresponding to the point A may need to be updated according to the offset, to acquire the second correspondence.

At 106, a surface color texture of the 3D model of the target object is acquired according to the second correspondence.

In this embodiment, the second correspondence is an updated correspondence generated according to an offset between the 3D points in different 3D networks, which is closer to an actual correspondence between the 3D model and the pixel. In this case, a pixel on a surface of the 3D model is acquired according to the second correspondence, to acquire the surface color texture of the 3D model. A specific process may be as follows.

At 1, the pixels respectively corresponding to the 3D points of the 3D model are acquired according to the second correspondence.

In this embodiment, in the second correspondence, the 3D point is in a one-to-one correspondence with the pixel. Therefore, a pixel corresponding to each 3D point in the 3D network may be acquired according to the second correspondence.

At 2, the pixels are covered on the corresponding 3D points to implement texture mapping on the surface of the 3D model.

The acquired pixels are pasted on the corresponding 3D points, which can implement texture mapping on the surface of the 3D model, so that the 3D model is colorful.

The method for acquiring a texture of a 3D model provided in the embodiments of the invention includes: acquiring at least two 3D networks generated from a target object at different angles, the at least two 3D networks respectively including a first correspondence between point cloud information and color information of the target object, and a first camera pose of the target object, the first camera pose representing a movement of the target object relative to a camera when the respective 3D network is generated; acquiring an offset between 3D points used for recording the same position of the target object in different 3D networks according to the first camera poses; updating the first correspondence according to the offset, to acquire a second correspondence between the point cloud information and the color information of the target object; and acquiring a surface color texture of a 3D model of the target object according to the second correspondence. By updating the correspondence between the point cloud information and the color information, a more precise and subtle alignment between the 3D points and the pixels in the 3D model is realized, and an effect of texture mapping of the 3D model is improved.

Because there is a deviation between the 3D networks generated at different shooting angles, the offset may need to be acquired, and the offset is acquired by searching for the closest point. For a specific acquisition method for searching for the closest point, a more specific implementation is provided in the embodiments of the invention, which is described in detail below with reference to the accompanying drawings.

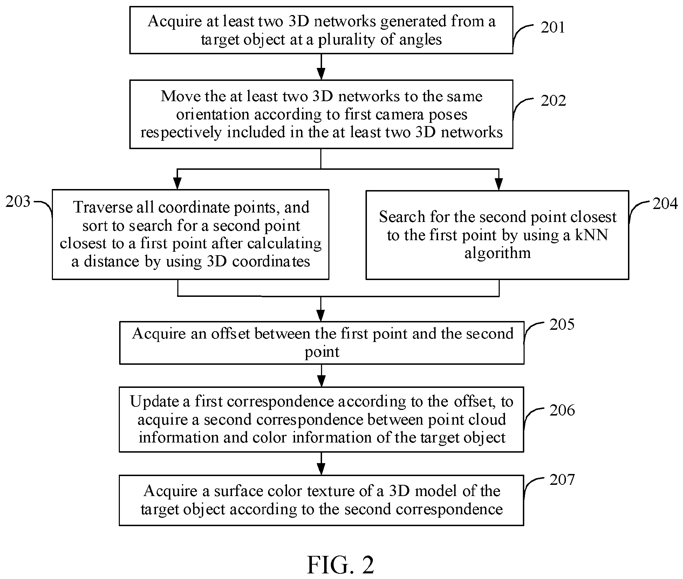

Referring to FIG. 2, as shown in FIG. 2, a method for acquiring a texture of a 3D model provided in a second embodiment of the invention includes the following steps.

At 201, at least two 3D networks generated from a target object at a plurality of angles are acquired.

In this embodiment, for this step, reference may be made to step 101, and details are not described herein again.

At 202, the at least two 3D networks are moved to the same orientation according to first camera poses respectively included in the at least two 3D networks.

In this embodiment, for this step, reference may be made to step 102, and details are not described herein again. After step 202 is performed, the user may perform any of the following step 203 or 204 as needed.

At 203, all coordinate points are traversed, and distances are calculated by using 3D coordinates and sorted to search for a second point closest to a first point.

At 204, the second point closest to the first point is searched for by using a k-Nearest Neighbor (kNN) algorithm.

For steps 205 to 207, reference may be made to steps 104 to 106, and details are not described herein again.

In the method provided in this embodiment of the invention, points that record the same position of the target object and that between different 3D networks are acquired by searching for a closest point, so that an offset between the different 3D networks is accurately acquired, thereby providing a more accurate basis for the subsequent update of the correspondence based on the offset, and providing accuracy of the correspondence between the point cloud information and the color information.

In the second embodiment, for a specific implementation of acquiring the second point closest to the first point, a plurality of methods may be used, including but not limited to: I. all the coordinate points are traversed, and the distances are calculated by using the 3D coordinates and sorted. II. Using the kNN algorithm. For convenience, the two cases are described in detail below.

I. Traverse all the coordinate points, and sort after calculating the distances by using the 3D coordinates.

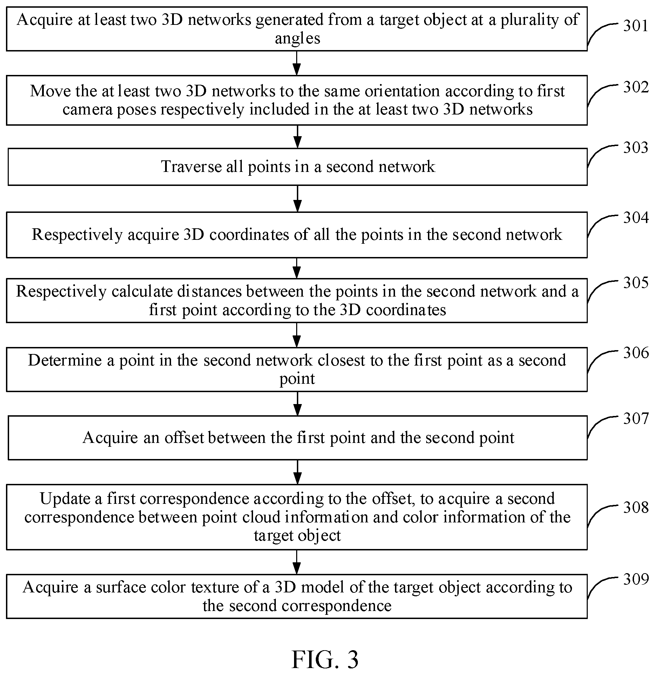

Referring to FIG. 3, as shown in FIG. 3, a method for acquiring a texture of a 3D model provided in a third embodiment of the invention includes the following steps.

For steps 301 and 302, reference may be made to steps 201 and 202, and details are not described herein again.

At 303, all points in the second network are traversed.

In this embodiment, the second network is one of the at least two 3D networks, and 3D points in the second network are acquired one by one, to traverse all the points in the second network.

At 304, 3D coordinates of all the points in the second network are acquired respectively.

In this embodiment, for acquired coordinate points in the second network, a 3D coordinate value (x, y, z) of each coordinate point is acquired.

At 305, distances between the points in the second network and the first point are calculated respectively according to the 3D coordinates.

In this embodiment, a 3D network in which the first point is located is a first network, that is, the second point and the first point are points in two different 3D networks. According to coordinate values of the 3D coordinates, the distances between the points in the second network and the first point in the first network may be calculated respectively.

At 306, a point in the second network closest to the first point is determined as the second point.

In this embodiment, sorting is performed according to calculation results of the distances, that is, the point in the second network closest to the first point is acquired as the second point according to sorted results, so that a point closest to the first point in the first network is found by traversing. This manner is repeated, and the same operation is performed on each point in the first network, to acquire points in the second network that are closest to the points in the first network.

The foregoing steps may alternatively be implemented in parallel for a plurality of 3D networks, and only one of the 3D networks (the first network) is as an example in the foregoing embodiment for description.

For subsequent steps 307 to 309, reference may be made to steps 204 to 206, and details are not described herein again.

In this embodiment, after the coordinate points are traversed, the closest point is acquired according to the coordinate values, so that another point closest to one point can be found more accurately. Meanwhile, because the coordinate values can provide accurate accuracy, in subsequent steps, the offset can also be accurately calculated according to the coordinate values, thereby realizing accurate update of the correspondence between the point cloud information and the color information.

Although the accuracy is relatively high in the manner provided in the third embodiment, the manner of traversing the 3D points has higher requirements on hashrate, and may also require longer computing time. Therefore, to resolve this problem, another implementation is provided in this embodiment of the invention.

II. Use the kNN algorithm. For convenience, the two implementations are described in detail below.

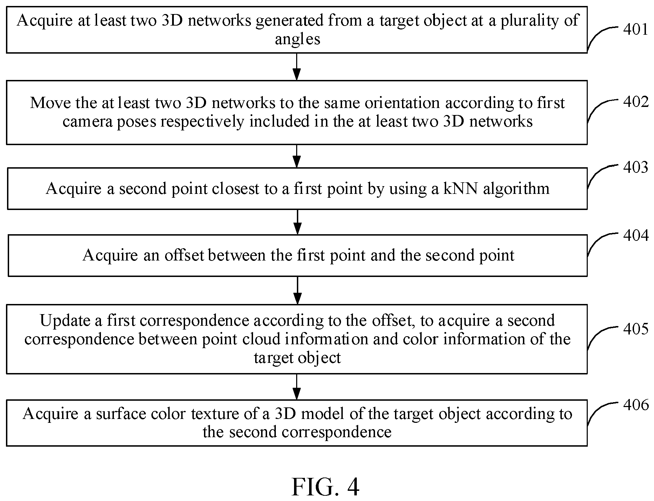

Referring to FIG. 4, as shown in FIG. 4, a method for acquiring a texture of a 3D model provided in a fourth embodiment of the invention includes the following steps.

For steps 401 and 402, reference may be made to steps 201 and 202, and details are not described herein again.

At 403, a second point closest to a first point is acquired by using a kNN algorithm.

In this embodiment, a core idea of the kNN algorithm is that if most of k samples nearest a sample in a feature space belong to a certain category, the sample also belongs to this category and has the characteristics of the samples in this category. In a policy of determining a classification, the algorithm determines a category of a to-be-classified sample based on only a category of the nearest one or several samples. The kNN method is related to only a very small number of adjacent samples in a policy of determining a category. Because the kNN method mainly depends on the surrounding limited nearby samples to determine the category, rather than depending on a method of determining a class field, for the point cloud information involved in this embodiment of the invention to process such a to-be-classified sample set with more intersections or overlaps of a class field, the KNN method is more suitable than other methods.

For subsequent steps 404 to 406, reference may be made to steps 204 to 206, and details are not described herein again.

In this embodiment, the kNN algorithm is used to search for the closest point, and the second point that is closest to the first point in the first network can be quickly found in the second network, thereby reducing hashrate resources and improving the efficiency of implementing the method for acquiring a texture of a 3D model.

In the method provided in the embodiments of the invention, in an initial state, the following two sets of correspondences are mainly involved.

I. First correspondence. In an initial image, there is a correspondence between a depth image and a color image, and specifically is a correspondence between a point recoding depth information in the depth image and a pixel in the color image. After the point recoding the depth information in the depth image is projected as the point cloud information in a 3D space, a correspondence between a 3D point in the point cloud information and the pixel in the color image is the first correspondence.

II. Offset correspondence. For initial images taken from different angles of a target object, there is a certain deviation between 3D networks acquired finally, and there is a certain offset between 3D points recoding the same position of the target object in different 3D networks. For example, between a first network and a second network, a point A and a point B are points recoding a nose tip of a user, but there is an offset between the two points. Therefore, there is a correspondence between the point A and the point B based on the offset.

A core idea of the method provided in this embodiment of the invention is to update the first correspondence through the offset correspondence, thereby improving the alignment of the pixel and the 3D point, and achieving more accurate texture mapping on the 3D model. For ease of understanding, a process of updating the first correspondence through the offset correspondence is described in detail below with reference to the accompanying drawings.

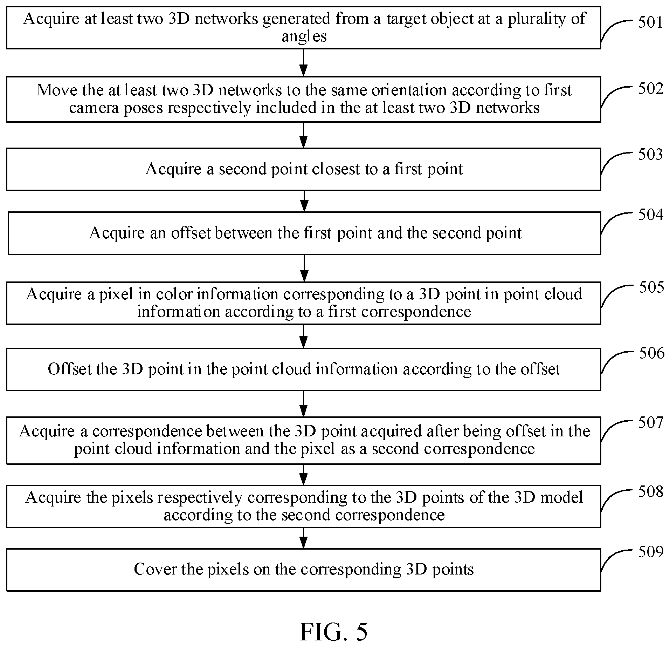

Referring to FIG. 5, as shown in FIG. 5, a method for acquiring a texture of a 3D model provided in a fifth embodiment of the invention includes the following steps.

For steps 501 to 504, reference may be made to steps 201 to 204. Optionally, steps 501 to 504 may alternatively be implemented by using the method in the third embodiment or the fourth embodiment, which is not limited in this embodiment of the invention.

At 505, a pixel in color information corresponding to a 3D point in point cloud information is acquired according to a first correspondence.

In this embodiment, when an initial 3D network is acquired, there is a first correspondence between the 3D point and the pixel, which can be acquired directly herein.

At 506, the 3D point in the point cloud information is offset according to the offset.

In this embodiment, step 506 may be specifically implemented in the following manner.
1. Acquire a rotation matrix R and a translation matrix T in the offset.
   In this embodiment, R represents a rotation operation between the 3D networks, and T represents a translation operation between the 3D networks, so that the offset between the 3D points may be quantified by using the two matrices.
2. Offset the 3D points by executing a formula D1=(R|T)×D2.

In this embodiment, D1 is point cloud information in a 3D network, and D2 is information in another 3D network. An offset of the point cloud information between the two 3D networks is implemented according to the offset.

At 507, a correspondence between the 3D point acquired after being offset in the point cloud information and the pixel is acquired as a second correspondence.

In this embodiment, a position of the point acquired after being offset is an actual position of the 3D point after the 3D networks are fused into a 3D model. In this case, based on the 3D point acquired after being offset, a correspondence between the 3D point at this position and the pixel is reconfirmed, thereby updating the first correspondence to the second correspondence, and realizing the alignment of the 3D point and the pixel.

The steps 503 to 507 may be executed not only once, but may be executed for a plurality of times and iterated repeatedly. The correspondence is more accurate after each iteration, and the specific number of iterations depends on the accuracy expected to be acquired.

At 508, the pixels respectively corresponding to the 3D points of the 3D model are acquired according to the second correspondence.

In this embodiment, a pixel corresponding to each 3D point in the 3D model may be acquired according to the updated second correspondence.

At 509, the pixels are covered on the corresponding 3D points.

In this embodiment, the pixels are covered on the corresponding 3D points to implement texture mapping on a surface of the 3D model. Specifically, specific technical details in the process of implementing texture mapping belong to the technical solutions in the related art. Based on the second correspondence, a person skilled in the art can independently select a specific implementation of texture mapping, which is not limited in this embodiment of the invention.

Further, this embodiment of the invention further provides a specific implementation of a method for acquiring a texture of a 3D model in actual work. For ease of understanding, detailed descriptions are provided below with reference to the accompanying drawings.

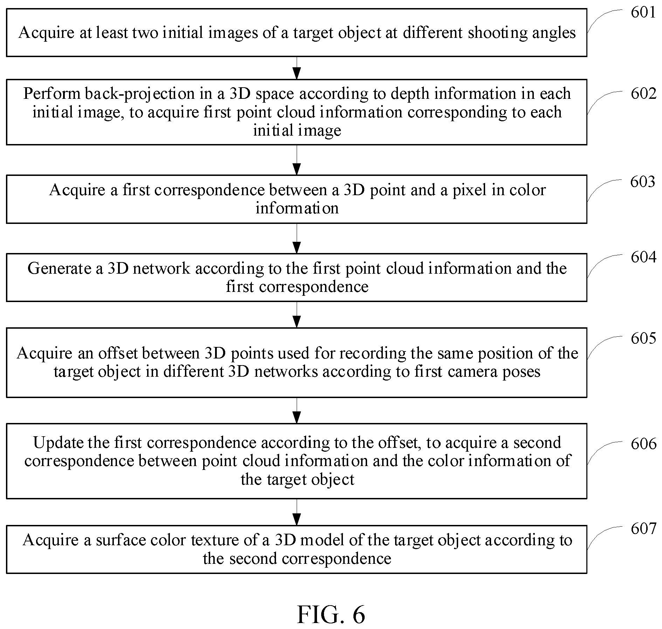

Referring to FIG. 6, as shown in FIG. 6, a method for acquiring a texture of a 3D model provided in a sixth embodiment of the invention includes the following steps.

At 601, at least two initial images of the target object at different shooting angles are acquired.

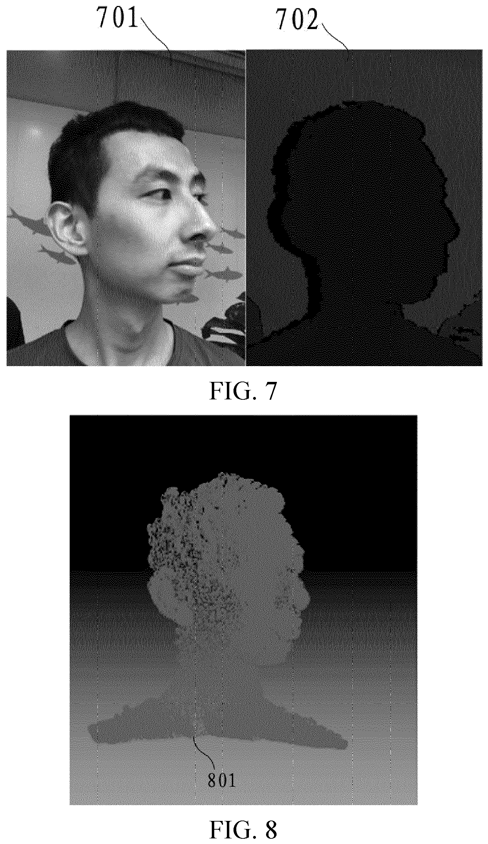

In this embodiment, referring to FIG. 7, FIG. 7 shows images of a side face of a user in the at least two acquired initial images, respectively including a color image 701 and a depth image 702. The color image 701 records pixels used for expressing a color texture, and the depth image 702 records points used for expressing depth information, that is, a distance between each point in the image and a camera.

At 602, back-projection is performed in a 3D space according to the depth information in each initial image, to acquire first point cloud information corresponding to each initial image.

In this embodiment, based on the depth image 702 in FIG. 7, first point cloud information 801 shown in FIG. 8 is acquired by projecting in the 3D space.

At 603, a first correspondence between a 3D point and a pixel in color information is acquired.

In this embodiment, the first point cloud information 801 is in a one-to-one correspondence with a point in the depth image 702, and the point in the depth image 702 is also in a one-to-one correspondence with a pixel in the color image 701. Therefore, the first correspondence between the 3D point and the pixel in the color information may be acquired according to the correspondence.

At 604, a 3D network is generated according to the first point cloud information and the first correspondence.

In this embodiment, the generated 3D network is a network shown in FIG. 8, except for that the first correspondence and information about a camera pose of the target object are also recorded in the 3D network.

At 605, an offset between 3D points used for recording the same position of the target object in different 3D networks is acquired according to first camera poses.

In this embodiment, for a specific method for acquiring the offset, reference may be made to any one of the foregoing implementations, and details are not described herein again.

At 606, the first correspondence is updated according to the offset, to acquire a second correspondence between the point cloud information and the color information of the target object.

In this embodiment, for a manner of updating based on the first correspondence to acquire the second correspondence, reference may be made to any one of the foregoing implementations, and details are not described herein again.

At 607, a surface color texture of the 3D model of the target object is acquired according to the second correspondence.

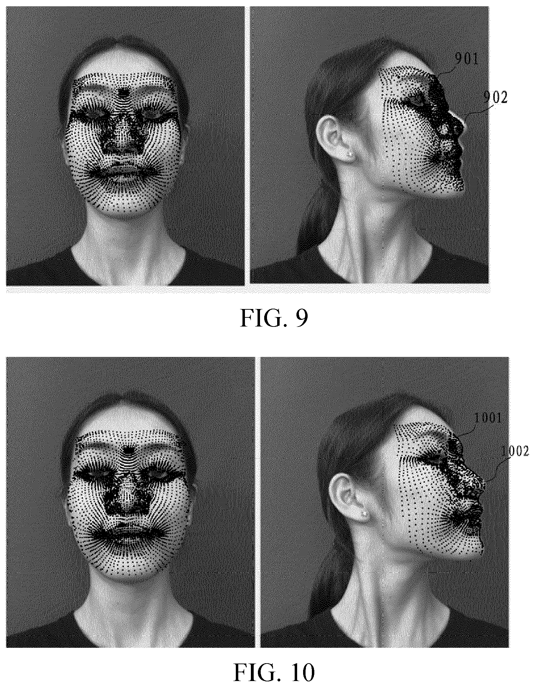

In this embodiment, for this step, reference may be made to any one of the foregoing implementations, and details are not described herein again. As shown in FIG. 9, FIG. 9 shows a correspondence between point cloud information and a pixel network 901 formed by pixels in a color image in the related art. It may be seen from FIG. 9 that because a correspondence between the point cloud information and color information is not updated, at positions such as a nose tip 902, the 3D model is smoothed during the modeling process, resulting in a certain offset, so that the pixel network 901 cannot be aligned with these areas. After being processed by the method provided in the embodiments of the invention, as shown in FIG. 10, it may be seen that a nose tip area 1002 can be completely covered by a pixel network 1001. After the correspondence is updated in the method provided in the embodiments of the invention, the range of the face can be more accurately covered by the pixel network 1001.

A method for acquiring a texture of a 3D model provided in the embodiments of the invention includes: acquiring at least two 3D networks generated from a target object at different angles, the at least two 3D networks respectively including a first correspondence between point cloud information and color information of the target object, and a first camera pose of the target object, the first camera pose representing a movement of the target object relative to a camera when the respective 3D network is generated; acquiring an offset between 3D points used for recording the same position of the target object in different 3D networks according to the first camera poses; updating the first correspondence according to the offset, to acquire a second correspondence between the point cloud information and the color information of the target object; and acquiring a surface color texture of a 3D model of the target object according to the second correspondence. By updating the correspondence between the point cloud information and the color information, a more precise and subtle alignment between the 3D points and the pixels in the 3D model is realized, and an effect of texture mapping of the 3D model is improved.

Described herein are the solutions provided in the embodiments of the invention. It may be understood that to implement the foregoing functions, the computing device includes corresponding hardware structures and/or software modules for performing the functions. A person skilled in the art may be easily aware that, modules and algorithm steps in the examples described with reference to the embodiments disclosed in this specification can be implemented by hardware or a combination of hardware and computer software in the invention. Whether a function is performed by hardware or computer software driving hardware depends on particular implementations and design constraints of the technical solutions. A person skilled in the art may use different methods to implement the described functions for each particular application, but it is not to be considered that the implementation goes beyond the scope of the invention.

In terms of a hardware structure, the foregoing method may be implemented by one physical device, or may be jointly implemented by a plurality of physical devices, or may be a logical functional module in a physical device. This is not specifically limited in this embodiment of the invention.

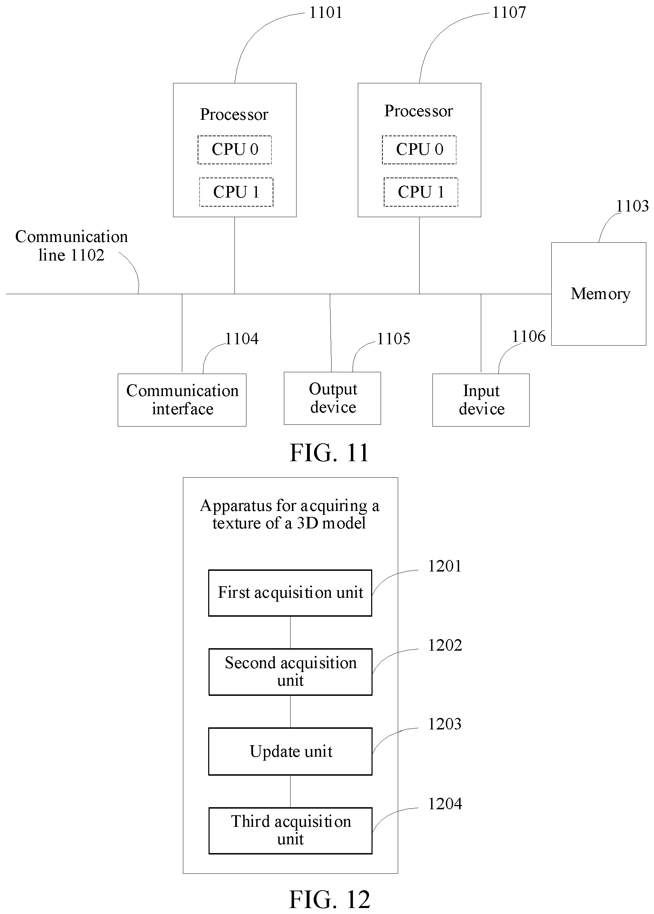

For example, the foregoing methods may be implemented by the computing device in FIG. 11. FIG. 11 is a schematic structural diagram of hardware of a computing device according to an embodiment of the invention. The computing device includes at least one processor 1101, a communication line 1102, a memory 1103, and at least one communication interface 1104.

The processor 1101 may be a general-purpose central processing unit (CPU), a microprocessor, an application-specific integrated circuit (ASIC), or one or more integrated circuits configured to control execution of a program in the solutions of the invention.

The communication line 1102 may include a channel, to transmit information between the foregoing components.

The communication interface 1104 is an apparatus using any transceiver or the like, to communicate with another device or a communication network such as an Ethernet, a radio access network (RAN), or a wireless local area network (WLAN).

The memory 1103 may be a read-only memory (ROM) or another type of static storage device that can store static information and instructions, a random access memory (RAM) or another type of dynamic storage device that can store information and instructions, or may be an electrically erasable programmable read-only memory (EEPROM) or a compact disc read-only memory (CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but is not limited thereto. The memory may exist independently, and is connected to the processor through the communication line 1102. The memory may further be integrated with the processor.

The memory 1103 is configured to store computer-executable instructions for performing the solutions of the invention, and is controlled and executed by the processor 1101. The processor 1101 is configured to execute the computer-executable instructions stored in the memory 1103 to implement the method provided in the embodiments of the invention.

Optionally, the computer executable instructions in this embodiment of the invention may also be referred to as application code. This is not limited in this embodiment of the invention.

During specific implementation, in an embodiment, the processor 1101 may include one or more CPUs, for example, a CPU 0 and a CPU 1 in FIG. 11.

During specific implementation, in an embodiment, the computing device may include a plurality of processors, such as the processor 1101 and the processor 1107 in FIG. 11. Each of these processors may be a single-core (single-CPU) processor, or may be a multi-core (multi-CPU) processor. The processor herein may be one or more devices or circuits, and/or a processing core configured to process data (for example, computer executable instructions).

During specific implementation, in an embodiment, the computing device may further include an output device 1105 and an input device 1106. The output device 1105 communicates with the processor 1101, and can display information in a plurality of manners. For example, the output device 1105 may be a liquid crystal display (LCD), a light-emitting diode (LED) display device, a cathode ray tube (CRT) display device, a projector, or the like. The input device 1106 communicates with the processor 1101, and can receive user input in a plurality of manners. For example, the input device 1106 may be a mouse, a keyboard, a touchscreen device, a sensor device, or the like.

The computing device may be a general-purpose device or a special-purpose device. During specific implementation, the computing device may be a desktop computer, a portable computer, a network server, a palmtop computer (personal digital assistant, PDA)), a mobile phone, a tablet computer, a wireless terminal device, an embedded device, or a device with a similar structure in FIG. 11. The type of the computing device is not limited in the embodiments of the invention.

In the embodiments of the invention, functional units of the storage device may be divided based on the foregoing method examples. For example, the functional units may be divided in such a way that each functional unit corresponds to a specific function, or two or more functions may be integrated into one processing unit. The integrated unit may be implemented in the form of hardware, or may be implemented in the form of a software functional unit. Unit division in the embodiments of the invention is an example, and is only logical function division. In an actual implementation, there may be another division manner.

For example, when the functional units are divided in an integrated manner, FIG. 12 shows a schematic diagram of an apparatus for acquiring a texture of a 3D model.

As shown in FIG. 12, the apparatus for acquiring a texture of a 3D model provided in an embodiment of the invention includes a first acquisition unit 1201, a second acquisition unit 1202, an update unit 1203 and a third acquisition unit 1204.

The first acquisition unit 1201 is configured to acquire at least two 3D networks generated from a target object at a plurality of angles, the at least two 3D networks each including a first correspondence between point cloud information and color information of the target object, and a first camera pose of the target object, the first camera pose representing a displacement of the target object relative to a reference position when the respective 3D network is generated.

The second acquisition unit 1202 is configured to: move the at least two 3D networks acquired by the first acquisition unit 1201 to a same orientation according to the first camera poses respectively included in the at least two 3D networks; acquire a second point closest to a first point in a first network, the second point being in a second network, and the first network and the second network being different 3D networks from the at least two 3D networks; and acquire an offset between the first point and the second point.

The update unit 1203 is configured to update the first correspondence according to the offset acquired by the second acquisition unit 1202, to acquire a second correspondence between the point cloud information and the color information of the target object.

The third acquisition unit 1204 is configured to acquire a surface color texture of a 3D model of the target object according to the second correspondence acquired by the update unit 1203.

Optionally, the second acquisition unit 1202 is further configured to: traverse all points in the second network; respectively acquire 3D coordinates of all the points in the second network; respectively calculate distances between the points in the second network and the first point according to the 3D coordinates; and determine a point in the second network closest to the first point as the second point.

Optionally, the second acquisition unit 1202 is further configured to acquire the second point closest to the first point by using a kNN algorithm.

Optionally, the update unit 1203 is further configured to: acquire a pixel in the color information corresponding to a 3D point in the point cloud information according to the first correspondence; offset the 3D point in the point cloud information according to the offset; and acquire a correspondence between the 3D point acquired after being offset in the point cloud information and the pixel as the second correspondence.

Optionally, the offset includes a rotation matrix R representing a rotation operation and a translation matrix T representing a translation operation, and the update unit 1203 is further configured to: execute the following formula: D1=(R|T)×D2, D1 being point cloud information in a 3D network, and D2 being information in another 3D network.

Optionally, the third acquisition unit 1204 is further configured to: acquire the pixels respectively corresponding to the 3D points of the 3D model according to the second correspondence; and cover the pixels on the corresponding 3D points to implement texture mapping on a surface of the 3D model.

Optionally, the first acquisition unit 1201 is further configured to: acquire at least two initial images of the target object at different shooting angles, the at least two initial images respectively recording depth information of the target object, the depth information being used for recording a distance between each point of the target object and the reference position, and the reference position being a position of a camera that photographs the target object; perform back-projection in a 3D space according to the depth information in each initial image, to acquire first point cloud information corresponding to each initial image, points in the first point cloud information being used for recording the 3D points of the target object; acquire the first correspondence between the 3D point and the pixel in the color information; and generate the 3D network according to the first point cloud information and the first correspondence.

In addition, an embodiment of the invention further provides a storage medium, the storage medium being configured to store a computer program, the computer program being configured to perform the method according to the foregoing embodiments.

An embodiment of the invention further provides a computer program product including instructions, the computer program product, when run on a computer, causing the computer to perform the method according to the foregoing embodiments.

For detailed descriptions of the program stored in the computer storage medium provided in this embodiment of the invention, reference may be made to the foregoing embodiments, and details are not described herein again.

The embodiments in this specification are all described in a progressive manner. Description of each of the embodiments focuses on differences from other embodiments, and reference may be made to each other for the same or similar parts among the embodiments. The apparatus embodiments basically correspond to the method embodiments and therefore are only briefly described, and reference may be made to the method embodiments for the associated part.

A person skilled in the art may further realize that, in combination with the embodiments herein, units and algorithm, steps of each example described can be implemented with electronic hardware, computer software, or the combination thereof. In order to clearly describe the interchangeability between the hardware and the software, compositions and steps of each example have been generally described according to functions in the foregoing descriptions. Whether the functions are executed in a mode of hardware or software depends on particular implementations and design constraint conditions of the technical solutions. A person skilled in the art may use different methods to implement the described functions for each particular implementation, but it is not to be considered that the implementation goes beyond the scope of the invention.

In combination with the embodiments disclosed herein, steps of the method or algorithm described may be directly implemented by using hardware, a software module executed by a processor, or the combination thereof. The software module may be placed in a RAM, a memory, a ROM, an electrically programmable ROM (EPROM), an EEPROM, a register, a hard disk, a removable magnetic disk, a CD-ROM, or any storage medium of other forms well-known in the art.

The foregoing description of the disclosed embodiments enables a person skilled in the art to implement or use the invention. Various modifications to the embodiments are obvious to a person skilled in the art, and the scope of protection is solely defined by the appended claims.

## Claims

1. A method for acquiring a texture of a three-dimensional, 3D, model, implemented by a computing device, the method comprising:
acquiring (101) at least two 3D networks generated from a target object at a plurality of shooting angles, the at least two 3D networks each comprising point cloud information of the target object, a first correspondence between the point cloud information and color information of the target object, and a first camera pose of the target object, the first camera pose representing a displacement of the target object relative to a reference position when the respective 3D network is generated;
moving (102) the at least two 3D networks to a same orientation according to the first camera poses respectively included in the at least two 3D networks;
acquiring (103) a first point in a first network and a second point in a second network, wherein the second point is closest to the first point, and the first network and the second network being different 3D networks from the at least two 3D networks;
acquiring (104) an offset between the first point and the second point; **characterised by**
updating (105) the first correspondence according to the offset, to acquire a second correspondence between the point cloud information and the color information of the target object; and
acquiring (106) a surface color texture of a 3D model of the target object according to the second correspondence.

2. The method according to claim 1, wherein acquiring (103) the second point in the second network comprises:
traversing (303) all points in the second network;
respectively acquiring (304) 3D coordinates of all the points in the second network;
respectively calculating (305) distances between the points in the second network and the first point according to the 3D coordinates; and
determining (306) a point in the second network closest to the first point as the second point.

3. The method according to claim 1, wherein acquiring (103) the second point in the second network comprises:
acquiring (403) the second point closest to the first point by using a k-Nearest Neighbor, kNN, algorithm.

4. The method according to claim 1, wherein updating (105) the first correspondence according to the offset, to acquire the second correspondence between the point cloud information and the color information of the target object, comprises:
acquiring (505) a pixel in the color information corresponding to a 3D point in the point cloud information according to the first correspondence;
offsetting (506) the 3D point in the point cloud information according to the offset; and
acquiring (507) a correspondence between the 3D point acquired after being offset in the point cloud information and the pixel as the second correspondence.

5. The method according to claim 4, wherein the offset includes a rotation matrix R representing a rotation operation and a translation matrix T representing a translation operation, and offsetting the 3D point in the point cloud information according to the offset comprises:
executing the following formula: D1=(R|T)×D2,
D1 being point cloud information in a 3D network, and D2 being information in another 3D network.

6. The method according to claim 4, wherein acquiring (106) the surface color texture of the 3D model of the target object according to the second correspondence comprises:
acquiring (508) the pixels respectively corresponding to the 3D points of the 3D model according to the second correspondence; and
covering (509) the pixels on the corresponding 3D points to implement texture mapping on a surface of the 3D model.

7. The method according to any one of claims 1 to 6, wherein acquiring (101) the at least two 3D networks generated from the target object at the plurality of shooting angles comprises:
acquiring (601) at least two initial images of the target object at a plurality of shooting angles, the at least two initial images respectively recording depth information of the target object, the depth information being used for recording a distance between each point of the target object and the reference position, and the reference position being a position of a camera that photographs the target object;
performing (602) back-projection in a 3D space according to the depth information in each initial image, to acquire first point cloud information corresponding to each initial image, a point in the first point cloud information being used for recording a 3D point of the target object;
acquiring (603) the first correspondence between the 3D point and the pixel in the color information; and
generating (604) the 3D network according to the first point cloud information and the first correspondence.

8. A computing device, comprising:
an interaction apparatus (1106), an input/output "I/O" interface, a processor (1101, 1107), and a memory (1103), the memory (1103) storing program instructions;
the interaction apparatus (1106) being configured to acquire operation instructions inputted by a user; and
the processor (1101, 1107) being configured to execute the program instructions stored in the memory (1103), to perform the method according to any one of claims 1 to 7.

9. A storage medium, configured to store a computer program which, when being executed by a computer, causes the computer to implement the method according to any one of claims 1 to 7.

10. A computer program product comprising instructions which, when being run on a computer, cause the computer to perform the method according to any one of claims 1 to 7.

## Patentansprüche

1. Verfahren zum Erlangen einer Textur eines dreidimensionalen, 3D, Modells, implementiert durch eine Rechenvorrichtung, wobei das Verfahren umfasst:
Erlangen (101) von mindestens zwei 3D-Netzen, die von einem Zielobjekt bei einer Mehrzahl von Aufnahmewinkeln erzeugt werden, wobei die mindestens zwei 3D-Netze jeweils Punktwolkeninformation des Zielobjekts, eine erste Entsprechung zwischen der Punktwolkeninformation und Farbinformation des Zielobjekts und eine erste Kamerapose des Zielobjekts umfassen, wobei die erste Kamerapose eine Verschiebung des Zielobjekts relativ zu einer Referenzposition darstellt, wenn das jeweilige 3D-Netz erzeugt wird;
Bewegen (102) der mindestens zwei 3D-Netze zu einer gleichen Ausrichtung gemäß den ersten Kameraposen, die jeweils in den mindestens zwei 3D-Netzen enthalten sind;
Erlangen (103) eines ersten Punkts in einem ersten Netz und eines zweiten Punkts in einem zweiten Netz, wobei der zweite Punkt dem ersten Punkt nächstgelegen ist und das erste Netz und das zweite Netz verschiedene 3D-Netze aus den mindestens zwei 3D-Netzen sind;
Erlangen (104) eines Versatzes zwischen dem ersten Punkt und dem zweiten Punkt;
**gekennzeichnet durch**
Aktualisieren (105) der ersten Entsprechung gemäß dem Versatz, um eine zweite Entsprechung zwischen der Punktwolkeninformation und der Farbinformation des Zielobjekts zu erlangen; und
Erlangen (106) einer Oberflächenfarbentextur eines 3D-Modells des Zielobjekts gemäß der zweiten Entsprechung.

2. Verfahren nach Anspruch 1, wobei das Erlangen (103) des zweiten Punkts in dem zweiten Netz umfasst:
Durchlaufen (303) aller Punkte in dem zweiten Netz;
jeweiliges Erlangen (304) von 3D-Koordinaten aller Punkte in dem zweiten Netz;
jeweiliges Berechnen (305) von Abständen zwischen den Punkten in dem zweiten Netz und dem ersten Punkt gemäß den 3D-Koordinaten; und
Bestimmen (306) eines Punkts in dem zweiten Netz, der dem ersten Punkt nächstgelegen ist, als den zweiten Punkt.

3. Verfahren nach Anspruch 1, wobei das Erlangen (103) des zweiten Punkts in dem zweiten Netz umfasst: Erlangen (403) des dem ersten Punkt nächstgelegenen zweiten Punkts unter Verwendung eines k-nächste-Nachbarn, kNN, Algorithmus.

4. Verfahren nach Anspruch 1, wobei das Aktualisieren (105) der ersten Entsprechung gemäß dem Versatz, um die zweite Entsprechung zwischen der Punktwolkeninformation und der Farbinformation des Zielobjekts zu erlangen, umfasst:
Erlangen (505) eines Pixels in der Farbinformation, das einem 3D-Punkt in der Punktwolkeninformation entspricht, gemäß der ersten Entsprechung;
Versetzen (506) des 3D-Punkts in der Punktwolkeninformation gemäß dem Versatz; und
Erlangen (507) einer Entsprechung zwischen dem 3D-Punkt, der nach dem Versetzen in der Punktwolkeninformation erlangt wird, und dem Pixel als die zweite Entsprechung.

5. Verfahren nach Anspruch 4, wobei der Versatz eine Rotationsmatrix R, die eine Rotationsoperation darstellt, und eine Translationsmatrix T, die eine Translationsoperation darstellt, beinhaltet und das Versetzen des 3D-Punkts in der Punktwolkeninformation gemäß dem Versatz umfasst:
Ausführen der folgenden Formel: D1=(R|T)×D2,
wobei D1 Punktwolkeninformation in einem 3D-Netz ist und D2 Information in einem anderen 3D-Netz ist.

6. Verfahren nach Anspruch 4, wobei das Erlangen (106) der Oberflächenfarbentextur des 3D-Modells des Zielobjekts gemäß der zweiten Entsprechung umfasst:
Erlangen (508) der Pixel, die jeweils den 3D-Punkten des 3D-Modells entsprechen, gemäß der zweiten Entsprechung; und
Aufbringen (509) der Pixel auf die entsprechenden 3D-Punkte, um Texturabbildung auf einer Oberfläche des 3D-Modells zu implementieren.

7. Verfahren nach einem der Ansprüche 1 bis 6, wobei das Erlangen (101) der mindestens zwei 3D-Netze, die von dem Zielobjekt bei der Mehrzahl von Aufnahmewinkeln erzeugt werden, umfasst:
Erlangen (601) von mindestens zwei Anfangsbildern des Zielobjekts bei einer Mehrzahl von Aufnahmewinkeln, wobei die mindestens zwei Anfangsbilder jeweils Tiefeninformation des Zielobjekts aufzeichnen, wobei die Tiefeninformation zum Aufzeichnen eines Abstands zwischen jedem Punkt des Zielobjekts und der Referenzposition verwendet wird und die Referenzposition eine Position einer Kamera ist, die das Zielobjekt fotografiert;
Durchführen (602) von Rückprojektion in einem 3D-Raum gemäß der Tiefeninformation in jedem Anfangsbild, um erste Punktwolkeninformation zu erlangen, die jedem Anfangsbild entspricht, wobei ein Punkt in der ersten Punktwolkeninformation zum Aufzeichnen eines 3D-Punkts des Zielobjekts verwendet wird;
Erlangen (603) der ersten Entsprechung zwischen dem 3D-Punkt und dem Pixel in der Farbinformation; und
Erzeugen (604) des 3D-Netzes gemäß der ersten Punktwolkeninformation und der ersten Entsprechung.

8. Rechenvorrichtung, umfassend:
eine Interaktionsvorrichtung (1106), eine Eingabe/Ausgabe-"I/O"-Schnittstelle, einen Prozessor (1101, 1107) und einen Speicher (1103), wobei der Speicher (1103) Programmanweisungen speichert;
wobei die Interaktionsvorrichtung (1106) dazu konfiguriert ist, von einem Benutzer eingegebene Bedienungsanweisungen zu erlangen; und
wobei der Prozessor (1101, 1107) dazu konfiguriert ist, die in dem Speicher (1103) gespeicherten Programmanweisungen auszuführen, um das Verfahren nach einem der Ansprüche 1 bis 7 durchzuführen.

9. Speichermedium, das dazu konfiguriert ist, ein Computerprogramm zu speichern, das, wenn es durch einen Computer ausgeführt wird, den Computer veranlasst, das Verfahren nach einem der Ansprüche 1 bis 7 zu implementieren.

10. Computerprogrammprodukt, umfassend Anweisungen, die, wenn sie auf einem Computer ausgeführt werden, den Computer veranlassen, das Verfahren nach einem der Ansprüche 1 bis 7 durchzuführen.

## Revendications

1. Procédé d'acquisition d'une texture d'un modèle tridimensionnel, 3D, mis en œuvre par un dispositif informatique, le procédé comprenant :
acquérir (101) au moins deux réseaux 3D générés à partir d'un objet cible à une pluralité d'angles de prise de vue, les au moins deux réseaux 3D comprenant chacun des informations de nuage de points de l'objet cible, une première correspondance entre les informations de nuage de points et des informations de couleur de l'objet cible, et une première pose de caméra de l'objet cible, la première pose de caméra représentant un déplacement de l'objet cible par rapport à une position de référence lorsque le réseau 3D respectif est généré ;
déplacer (102) les au moins deux réseaux 3D vers une même orientation selon les premières poses de caméra respectivement incluses dans les au moins deux réseaux 3D ;
acquérir (103) un premier point dans un premier réseau et un deuxième point dans un deuxième réseau, dans lequel le deuxième point est le plus proche du premier point, et le premier réseau et le deuxième réseau étant des réseaux 3D différents parmi les au moins deux réseaux 3D ;
acquérir (104) un décalage entre le premier point et le deuxième point ; **caractérisé par**
mettre à jour (105) la première correspondance selon le décalage, pour acquérir une deuxième correspondance entre les informations de nuage de points et les informations de couleur de l'objet cible ; et
acquérir (106) une texture de couleur de surface d'un modèle 3D de l'objet cible selon la deuxième correspondance.

2. Procédé selon la revendication 1, dans lequel l'acquisition (103) du deuxième point dans le deuxième réseau comprend :
parcourir (303) tous les points dans le deuxième réseau ;
acquérir (304) respectivement des coordonnées 3D de tous les points dans le deuxième réseau ;
calculer (305) respectivement des distances entre les points dans le deuxième réseau et le premier point selon les coordonnées 3D ; et
déterminer (306) un point dans le deuxième réseau le plus proche du premier point comme étant le deuxième point.

3. Procédé selon la revendication 1, dans lequel l'acquisition (103) du deuxième point dans le deuxième réseau comprend : acquérir (403) le deuxième point le plus proche du premier point en utilisant un algorithme k plus proches voisins, kNN.

4. Procédé selon la revendication 1, dans lequel la mise à jour (105) de la première correspondance selon le décalage, pour acquérir la deuxième correspondance entre les informations de nuage de points et les informations de couleur de l'objet cible, comprend :
acquérir (505) un pixel dans les informations de couleur correspondant à un point 3D dans les informations de nuage de points selon la première correspondance ;
décaler (506) le point 3D dans les informations de nuage de points selon le décalage ; et
acquérir (507) une correspondance entre le point 3D acquis après avoir été décalé dans les informations de nuage de points et le pixel comme étant la deuxième correspondance.

5. Procédé selon la revendication 4, dans lequel le décalage inclut une matrice de rotation R représentant une opération de rotation et une matrice de translation T représentant une opération de translation, et le décalage du point 3D dans les informations de nuage de points selon le décalage comprend :
exécuter la formule suivante : D1=(R|T)×D2,
D1 étant des informations de nuage de points dans un réseau 3D, et D2 étant des informations dans un autre réseau 3D.

6. Procédé selon la revendication 4, dans lequel l'acquisition (106) de la texture de couleur de surface du modèle 3D de l'objet cible selon la deuxième correspondance comprend :
acquérir (508) les pixels correspondant respectivement aux points 3D du modèle 3D selon la deuxième correspondance ; et
couvrir (509) les pixels sur les points 3D correspondants pour mettre en œuvre un placage de texture sur une surface du modèle 3D.

7. Procédé selon l'une quelconque des revendications 1 à 6, dans lequel l'acquisition (101) des au moins deux réseaux 3D générés à partir de l'objet cible à la pluralité d'angles de prise de vue comprend :
acquérir (601) au moins deux images initiales de l'objet cible à une pluralité d'angles de prise de vue, les au moins deux images initiales enregistrant respectivement des informations de profondeur de l'objet cible, les informations de profondeur étant utilisées pour enregistrer une distance entre chaque point de l'objet cible et la position de référence, et la position de référence étant une position d'une caméra qui photographie l'objet cible ;
effectuer (602) une rétroprojection dans un espace 3D selon les informations de profondeur dans chaque image initiale, pour acquérir des premières informations de nuage de points correspondant à chaque image initiale, un point dans les premières informations de nuage de points étant utilisé pour enregistrer un point 3D de l'objet cible ;
acquérir (603) la première correspondance entre le point 3D et le pixel dans les informations de couleur ; et
générer (604) le réseau 3D selon les premières informations de nuage de points et la première correspondance.

8. Dispositif informatique, comprenant :
un appareil d'interaction (1106), une interface d'entrée/sortie « I/O », un processeur (1101, 1107), et une mémoire (1103), la mémoire (1103) stockant des instructions de programme ;
l'appareil d'interaction (1106) étant configuré pour acquérir des instructions d'opération saisies par un utilisateur ; et
le processeur (1101, 1107) étant configuré pour exécuter les instructions de programme stockées dans la mémoire (1103), pour effectuer le procédé selon l'une quelconque des revendications 1 à 7.

9. Support de stockage, configuré pour stocker un programme d'ordinateur qui, lorsqu'il est exécuté par un ordinateur, amène l'ordinateur à mettre en œuvre le procédé selon l'une quelconque des revendications 1 à 7.

10. Produit programme d'ordinateur comprenant des instructions qui, lorsqu'elles sont exécutées sur un ordinateur, amènent l'ordinateur à effectuer le procédé selon l'une quelconque des revendications 1 à 7.
